# EUROPEAN PATENT SPECIFICATION

(11) **EP 1 004 159 B1**
(45) Date of publication and mention of the grant of the patent: **19.03.2008**
(21) Application number: 98931840.7
(22) Date of filing: 10.07.1998
(51) Int. Cl.: H02B 11/00, H02B 1/21, H02B 1/056

(54) **A LINK SWITCH**
VERBINDUNGSSCHALTER
COMMUTATEUR DE LIAISON

(30) Priority: 10.07.1997 AU PO783297
(43) Date of publication of application: 31.05.2000
(73) Proprietor: Tappat Engineering Pty. Limited, Brookvale, NSW 2100 (AU)
(72) Inventor: DANNENBERG, Patrick, Brookvale, NSW 2100 (AU)
(74) Representative: Driver, Virginia Rozanne
(86) International application number: PCT/AU1998/000537
(87) International publication number: WO 1999/003180

(56) References cited:
- EP-A- 0 127 298
- EP-A- 0 411 871
- US-A- 2 805 294
- US-A- 3 343 042
- US-A- 4 531 174
- US-A- 5 334 808
- DATABASE WPI Week 199721, Derwent Publications Ltd., London, GB; Class X13, AN 1997-233958, XP002947724 & JP 09 074 627 A (MITSUBISHI ELECTRIC CORPORATION) 18 March 1997

## Description

### Field of the Invention

The present invention relates to the field of electrical switches and in particular discloses a new form of conveniently operated link switch for high current power supplies.

### Background of the Invention

Link switches for voltage power supplies and cabling are well known. A power line can carry a large amount of current and it is necessary to ensure proper switching or interconnection between two power cables. In particular, compact operation of an open point link switch is highly desirable. Prior art switches have a number of significant disadvantages. Firstly, they are often unduly large thereby taking up excessive space especially where space, is a premium. Additionally, they often involve the necessity to access live components which results in the resulting danger of possible electrocution. Electrical switches are further often able to be tampered with and the degree of contact interconnection can be highly variable.

US Patent 5334808 to Bur et al discloses a draw out circuit breaker arrangement which is inserted into a series of spring contacts (26). The leaf springs 26 of Bur et al would be totally inadequate for carrying high current under continuous thermal cycling. Under thermal cycling and condensation, the springs would become weak and resistance across the joint would increase. With high current loads a runaway effect would occur resulting in catastrophic failure.

### Summary of the Invention

It is an object of the present invention to provide a superior form of compact open point link switch suitable for use with electric power supply lines.

In accordance with the first aspect of the present invention there is provided a link switch for completing an electrical connection between at least two high current, low voltage cables, the link switch comprising: first and second conductive clamping portions for clamping the ends of said cables, said conductive clamping portions having mating surfaces for the reception of a switch completion unit between said conductive clamping portions; the switch completion unit including at least one conductive portion for mating with said mating surface and characterised in that said switch completion unit further includes a locking means for applying pressure to said conductive portion to lock said conductive portion in contact against said conductive clamping portions.

Further, the conductive clamping portions can include a series of initial contact surfaces which make initial contact with a mating initial surface of the switch completion unit, the initial surfaces being different from the mating surfaces such that initial contact is made in a subsequently inoperative surface of the switch completion unit.

Preferably the switch completion unit is slidable into and out of an aperture defined by the conductive clamping portions and includes a cam locking unit for providing a cam lock of the conductive portion in contact with the conductive clamping portions. The switch completion unit preferably includes a detachable handle utilised in the operation of the switch which is detachable only when the switch completion unit is in a locked position.

The switch unit conductive portions can be shaped to provide a point contact with the conductive clamping portions and can include a generally planar surface having protuberances at extremities thereof.

Preferably, the number of conductive clamping portions is two and the cables are clamped to the conductive clamping portions in a spaced apart substantially parallel manner. Ideally, the clamping portions are adapted to be interchangeable so as to clamp a series of differently surface profiled cable ends and the clamping portions can include a resilient clamping means for resiliently clamping the cables to the conductive clamping portions. The cam lock can include a profiled surface that, upon rotation of the cam lock in a first direction, the profiled surface exserts an increasing pressure on the conductive portions to a limit position prescribed by an interlocking ball and socket arrangement.

### Brief Description of the Drawings

Notwithstanding any other forms which may fall within the scope of the present invention, preferred forms of the invention will now be described, by way of example only, with reference to the accompanying drawings in which:
Fig. 1 is an exploded perspective view of a first portion of the switch of the preferred embodiment and in particular it shows the conductive portions of the switch;
Fig. 2 illustrates an exploded perspective of the handle unit of Fig. 1 for insertion into the switch of the preferred embodiment;
Fig. 2a illustrates a second perspective view of portions of the handle unit of Fig. 2; and
Fig. 3 is a perspective view of an alternative block arrangement.

### Description of Preferred and Other Embodiments

The preferred embodiment comprises a switch having a detachable switching mechanism that can be inserted and actuated so as to complete a current circuit. Further, the switch also includes a detachable handle for activating the switch via a locking means.

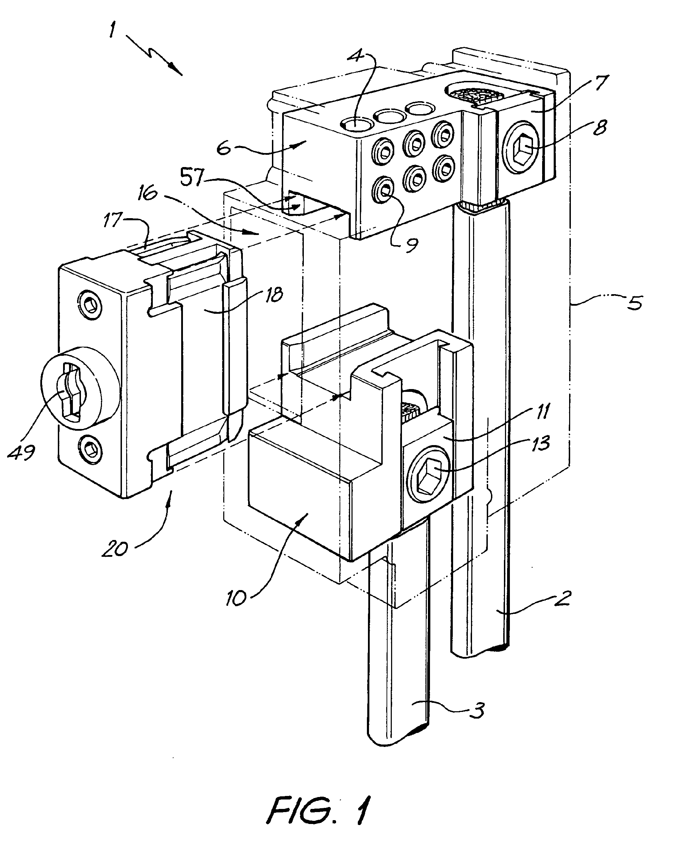

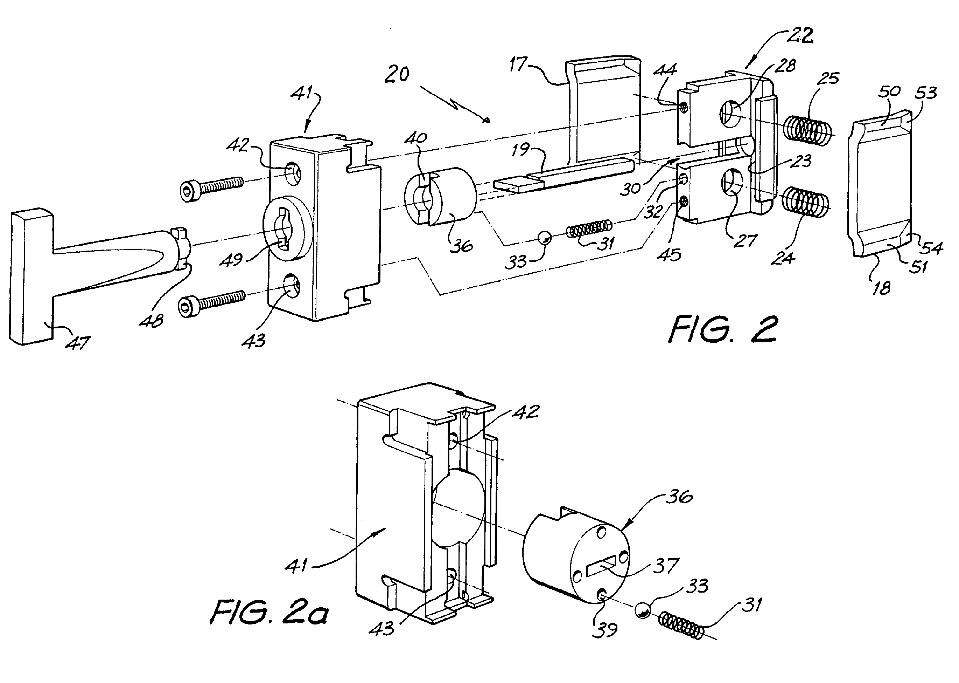

Turning now to Fig. 1, there is illustrated the electrically conductive components of the switch 1 which interconnects two cables to 2, 3. The cable 2 is inserted through an outer polycarbonate covering portion 5 (shown in phantom) and is clamped between the metal block portion 6 and a dovetail block 7 by means of screw bolt 8. The block portion 6 includes a series of holes eg. 4 for the insertion of a small conductor wires for "tapping off" of power from the switch 1. The conductor wires are fixed within holes 4 by means of screw bolts eg. 9. The second cable 3 is inserted through an aperture in the case portion 5 and is clamped between conductive block portion 10, and dovetail portion 11 with again the portions being clamped together by means of screw bolt 13. Two metal leaf portions 17, 18 which are contained within a handle switch portion 20, which itself will be further described hereinafter with reference to Fig. 2, are inserted in an aperture 16 in the outer casing 5 and mate with mating portions of the conductive blocks 6, 10 so as to form an electrical interconnection on demand. The two portions 17, 18 are forced apart by means of cam portion, which is activated by a handle so as to lock the two portions 17, 18 firmly against corresponding portions of the conductive blocks 6, 10.

Turning now to Fig. 2, there is illustrated 20 an exploded perspective view of the handle portion utilised to activate the switch. The handle portion includes the previously mentioned metal leaf portions 17, 18 which are inserted in a corresponding mating groove within plastic former 22. The leaf portion 18 being inserted in groove 23. The two leaf portions are resiliently held apart by means of springs 24, 25 which act to resiliently push the leaf portions 17, 18 apart within their corresponding grooves. The spring portions 24, 25 are inserted through holes 27, 28 in plastic former 22. The copper portion 19 is inserted in a cylindrically aperture 30 within former 22. Spring 31 is inserted in aperture 32 and ball portion 33 is placed upon one end of spring portion 31.

One end of conductive portion 19 mates with plastic unit 36 which has an end face as illustrated in Fig. 2a which includes slot 37 and a series of holes eg. 39 which mate with ball 33, the plastic unit 36 being generally rotatable by means of slots 40. The plastic unit 36 is inserted in top plastic former unit 41 which is designed to mate with the rest of the handle portion 20 with screw holes 42, 43 mating with corresponding screw holes 44, 45 in plastic former 22 so as to provide for screws to lock the pieces together.

A plastic handle 47, having end mating portion 48, is designed to be inserted through slot 49 so as to engage plastic locking unit 36 and thereby rotate metal unit 19 forcing the two leafed portions 17, 18 apart in accordance with the requirement of ensuring good electrical contact between surfaces. The unit 19 includes a cam surface such that when the two portions 17, 18 are forced apart the cam surface interacts with ball 33 and holes 39 to lock the unit 19 in one of two positions such that the handle 47 can only be rotated 90° between, the two positions each of which corresponds to a mating of ball 33 with a hole 39.

Hence, the handle unit 20 is designed to be inserted through aperture 16 of Fig. 1 with the leaf portions 17, 18 being placed between corresponding mating portions 6, 10. Subsequently, the handle 47 is rotated thereby providing a camlocking arrangement of the two leaf portions 17, 18, firmly pressing them in electrical contact with the corresponding block portions. The handle 47 is then removed thereby providing a tamper proof switch connection between the two wires 2, 3 on demand.

When subsequent deactivation of the switch is required, the handle portion 47 can be inserted within slot 49 and the handle rotated and the whole of the handle unit 20 removed from the plastic case 5.

The preferred embodiment further includes the advantageous feature that the two leafed portions 17, 18 have raised end protuberances eg. 50, 51 which form the electrical contact with the corresponding metal block portions 6, 10. As a point contact is made, possibilities of welding surfaces during catastrophic failure are substantially reduced. Preferably, the leafed portions eg. 17, 18 further include bevelled edges 53, 54 so as to reduce the problems associated with insertion and arcing within the metal portion 6, 10. Hence, the bevelled surfaces 53, 54 first form conductive contact with corresponding mating surfaces e.g 57 (Fig. 1) on the surface of blocks 6, 10 such that any initial arcing is across these surfaces and not across the primary contact surfaces 50, 51. These leads to improved long term conductivity.

The foregoing arrangement provides an extremely compact and slim connector which can be packaged alongside other connectors where three phase power is required. The two parallel cables can be closely packaged next to one another in any linked switch arrangement. The holes 39 provide a snap fit for plastic element 36 which results in handle 47 being snapped into one of a predetermined number of places. This assists in ensuring continued proper operation of the switch 20.

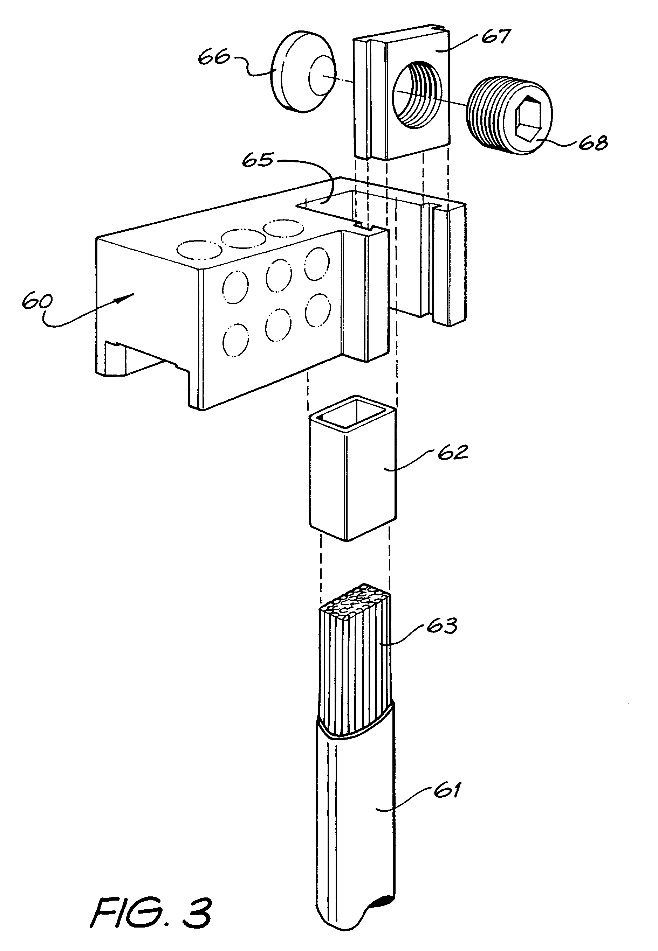

Of course, other arrangements are possible. The metal blocks 6, 10 can be adapted to fit different cable types depending on conditions. For example, it is often necessary to prevent oxidisation of aluminium cables and to ensure compatible metal materials are utilised in switch. Hence, the blocks 6, 10 can be adapted for different cable types. For example, as shown in Fig. 3, there is illustrated an alternative form of block 60 which is adapted to receive a cable 61 which has been crimped utilising a tin plated brass ferrule 62 such that the crimping forms a general tight compaction of the aluminium strands 63 of cable 61. The crimping and compacting of the aluminium strands leads to a positive transition locking out the opportunity for oxidation. The generally rectangular cross-section of ferrule 62 is designed to mate with the surface of metal block 60 and to be clamped in a resilient manner against the surface 65 by means of a belleville washer 66 which is forced against the ferrule 62 by means of dovetail element 67 and screw bolt 68. The belleville washer 66 acts to resiliently compress the aluminium cable so as to ensure that any creep in the aluminium does not become a problem. Further, the ferrule 62 is preferably coated with an anti-oxidising agent such as alminox which assists in eliminating moisture oxidisation from the aluminium cable. The ferrule 62 can further comprise a tin-plated brass or copper element.

Hence, it will be readily evident that the preferred embodiment can be readily adapted so as to provide for different types and sized cables depending on the cables utilised in any particular area.

## Claims

1. A link switch (1) for completing an electrical connection between at least two high current, low voltage cables (2,3), the link switch comprising:
first and second conductive clamping portions (6,10) for clamping the ends of said cables (2,3), said conductive clamping portions having mating surfaces(57) for the reception of a switch completion unit (20) between said conductive clamping portions;
the switch completion unit (20) including
at least one conductive portion (18) for mating with said mating surface (57) and
**characterised in that** said switch completion unit (20) further includes
a locking means (19) for applying pressure to said conductive portion (18) to lock said conductive portion (18) in contact against said conductive clamping portions (6,10).

2. A link switch (1) as claimed in claim 1 wherein said switch completion unit (20) is slidable into and out of an aperture (16) defined by said conductive clamping portions (6,10).

3. A link switch (1) as claimed in any previous claim wherein said locking means (19) includes a cam locking unit for providing a cam lock of said conductive portion (18) in contact with said conductive clamping portions (6,10).

4. A link switch (1) as claimed in any previous claim wherein said switch completion unit (20) includes a detachable handle (47) utilised in the operation of said switch (1).

5. A link switch (1) as claimed in claim 4 wherein said handle (47) is detachable only when said switch completion unit (20) is in a locked position.

6. A link switch (1) as claimed in any previous claim wherein the number of switch unit conductive portions (17,18) is two and said locking means is located between said switch unit conductive portions (17,18) so as to force them apart.

7. A link switch (1) as claimed in claim 6 wherein said switch unit conductive portions (17,18) are shaped to provide a point contact with said conductive clamping portions (6, 10) .

8. A link switch (1) as claimed in any previous claim wherein said switch unit conductive portions (17,18) include a generally planar surface having protuberances (50,51) at extremities thereof.

9. A link switch (1) as claimed in any previous claim wherein the number of conductive clamping portions (6,10) is two and said cables (2,3) are clamped to said conductive clamping portions (6,10) in a spaced apart substantially parallel manner.

10. A link switch (1) as claimed in any previous claim wherein said clamping portions (6,10) are adapted to be interchangeable so as to clamp a series of differentially surface profiled cable ends.

11. A link switch (1) as claimed in any previous claim herein said clamping portions (6,10) include a resilient clamping means for resiliently clamping said cables (2,3) to said conductive clamping portions.

12. A link switch (1) as claimed in claim 11 wherein said resilient clamping means includes a Belleville washer (66) urged against said cable (2,3).

13. A link switch (1) as claimed in claim 3 wherein said cam lock (19) includes a profiled surface that, upon rotation of said cam lock (19) in a first direction, said surface exerts an increasing pressure on said conductive portions (17,18) to a limit position prescribed by an interlocking ball (33) and socket (39) arrangement.

14. A link switch (1) as claimed in any previous claim wherein said conductive clamping portions (6,10) include a series of initial contact surfaces (57) which make initial contact with a mating initial surface (53,54) of said switch completion unit (20), said initial surfaces (53,54) being differential from said mating surfaces (50,51) such that initial contact is made in a subsequently inoperative surface of said switch completion unit (20).

## Patentansprüche

1. Verbindungsschalter (1) zum Herstellen einer elektrischen Verbindung zwischen mindestens zwei Starkstrom-Niederspannungskabeln (2,3), wobei der Verbindungsschalter umfasst:
erste und zweite leitfähige Klemmbereiche (6, 10) zum Einklemmen der Enden der Kabel (2, 3), wobei die leitfähigen Klemmbereiche Passflächen (57) zur Aufnahme einer Schalterabschlusseinheit (20) zwischen den leitfähigen Klemmbereichen aufweisen;
wobei die Schalterabschlusseinheit (20) umfasst
zumindest einen leitfähigen Bereich (18) zum Einpassen in die Passfläche und
**dadurch gekennzeichnet, dass** die Schalterabschlusseinheit (20) weiterhin umfasst
ein Sperrmittel (19) zum Ausüben von Druck auf den leitfähigen Bereich (18), um den leitfähigen Bereich (18) im Kontakt mit den leitfähigen Klemmbereichen (6, 10) zu sperren.

2. Verbindungsschalter (1) gemäß Anspruch 1, wobei die Schalterabschlusseinheit (20) in und aus einer Öffnung (16) gleiten kann, die durch die leitfähigen Klemmbereiche (6, 10) definiert sind.

3. Verbindungsschalter (1) gemäß einem der vorhergehenden Ansprüche. wobei das Sperrmittel (19) eine Nockensperreinheit enthält, um eine Nockensperre des leitfähigen Bereichs (18) im Kontakt mit den leitfähigen Klemmbereichen (6, 10) vorzusehen.

4. Verbindungsschalter (1) gemäß einem der vorhergehenden Ansprüche, wobei die Schalterabschlusseinheit (20) einen abnehmbaren Griff (47) enthält, der bei Betrieb des Schalters (1) eingesetzt wird.

5. Verbindungsschalter (1) gemäß Anspruch 4, wobei der Griff (47) nur abnehmbar ist, wenn die Schalterabschlusseinheit (20) sich in einer gesperrten Position befindet.

6. Verbindungsschalter (1) gemäß einem der vorhergehenden Ansprüche, wobei die Anzahl der leitfähigen Bereiche (17,18) der Schaltereinheit zwei beträgt und das Sperrmittel sich zwischen den leitfähigen Bereichen (17, 18) der Schaltereinheit befindet, um sie auseinanderzuspreizen.

7. Verbindungsschalter (1) gemäß Anspruch 6, wobei die leitfähigen Bereiche (17, 18) der Schaltereinheit ausgeformt sind, um einen Punktkontakt mit den leitfähigen Klemmbereichen (6, 10) zu bilden.

8. Verbindungsschalter (1) gemäß einem der vorhergehenden Ansprüche, wobei die leitfähigen Bereiche (17, 18) der Schaltereinheit eine allgemein plane Oberfläche mit Ausstülpungen (50, 51) an deren Enden enthalten.

9. Verbindungsschalter (1) gemäß einem der vorhergehenden Ansprüche, wobei die Anzahl der leitfähigen Bereiche (6, 10) der Schaltereinheit zwei beträgt und die Kabel in den leitfähigen Bereichen (6, 10) der Schaltereinheit in einer im Wesentlichen parallelen Weise beabstandet eingeklemmt sind.

10. Verbindungsschalter (1) gemäß einem der vorhergehenden Ansprüche, wobei die Klemmbereiche (6, 10) austauschbar ausgebildet sind, um eine Reihe von Kabelenden mit unterschiedlichen Oberflächenprofilen einzuklemmen.

11. Verbindungsschalter (1) gemäß einem der vorhergehenden Ansprüche, wobei die Klemmbereiche (6, 10) ein elastisches Klemmmittel zum elastischen Einklemmen der Kabel (2, 3) in die leitfähigen Klemmbereiche umfasst.

12. Verbindungsschalter (1) gemäß Anspruch 11, wobei das elastische Klemmmittel eine Belleville-Dichtung (66) umfasst, die gegen das Kabel (2, 3) gepresst wird.

13. Verbindungsschalter (1) gemäß Anspruch 3, wobei die Nockensperre (19) eine Profiloberfläche enthält, bei der beim Drehen der Nockensperre (19) in eine erste Richtung die Fläche einen steigenden Druck auf die leitfähigen Bereiche (17, 18) ausübt, um eine Position zu begrenzen, die durch die Anordnung eines Verschlussballs (33) und einer Buchse (39) bestimmt wird.

14. Verbindungsschalter (1) gemäß einem der vorhergehenden Ansprüche, wobei die leitfähigen Klemmbereiche (6,10) eine Reihe von ersten Kontaktflächen (57) enthalten, die einen Erstkontakt mit einer ersten Passfläche (53, 54) der Schalteranschlusseinheit (20) herstellen, wobei die ersten Flächen (53, 54) von den Passflächen (50,51) dergestalt verschieden sind, dass der Erstkontakt in einer nachfolgend unwirksamen Fläche der Schalterabschlusseinheit (20) hergestellt wird.

## Revendications

1. Commutateur de liaison (1) pour terminer une connexion électrique entre au moins deux câbles de haute intensité et basse tension (2, 3), ledit commutateur de liaison comprenant :
une première et une seconde parties de serrage conductrices (6, 10) pour serrer les extrémités desdits câbles (2, 3), lesdites parties de serrage conductrices comprenant des surfaces d'accouplement (57) pour la réception d'une unité de terminaison de commutation (20) entre lesdites parties de serrage conductrices ;
l'unité de terminaison de commutation (20) comprenant :
au moins une partie conductrice (18) destinée à s'accoupler avec ladite surface d'accouplement (57), et
**caractérisé en ce que** ladite unité de terminaison de commutation (20) comprend en outre
un moyen de verrouillage (19) pour appliquer une pression à ladite partie conductrice (18) en vue de verrouiller ladite partie conductrice (18) en contact contre lesdites parties de serrage conductrices (6, 10).

2. Commutateur de liaison (1) selon la revendication 1, dans lequel ladite unité de terminaison de commutation (20) peut coulisser à travers une ouverture (16) définie par lesdites parties de serrage conductrices (6, 10), vers l'intérieur et vers l'extérieur.

3. Commutateur de liaison (1) selon l'une quelconque des revendications précédentes, dans lequel ledit moyen de verrouillage (19) comprend une unité de verrouillage à came destinée à assurer un verrouillage par came de ladite partie conductrice (18) en contact avec lesdites parties de serrage conductrices (6, 10).

4. Commutateur de liaison (1) selon l'une quelconque des revendications précédentes, dans lequel ladite unité de terminaison de commutation (20) comprend une poignée détachable (47) utilisée pour le fonctionnement dudit commutateur (1).

5. Commutateur de liaison (1) selon la revendication 4, dans lequel ladite poignée (47) est détachable seulement quand ladite unité de terminaison de commutation (20) est dans une position verrouillée.

6. Commutateur de liaison (1) selon l'une quelconque des revendications précédentes, dans lequel le nombre de parties conductrices (17, 18) de l'unité de commutation est de deux et ledit moyen de verrouillage est situé entre lesdites parties conductrices (17, 18) de l'unité de commutation de façon à les écarter de force.

7. Commutateur de liaison (1) selon la revendication 6, dans lequel lesdites parties conductrices (17, 18) de l'unité de commutation ont une forme adaptée pour assurer un contact ponctuel avec lesdites parties de serrage conductrices (6, 10).

8. Commutateur de liaison (1) selon l'une quelconque des revendications précédentes, dans lequel lesdites parties conductrices (17, 18) de l'unité de commutation comprennent une surface globalement planaire comprenant des protubérances (50, 51) aux extrémités de celle-ci.

9. Commutateur de liaison (1) selon l'une quelconque des revendications précédentes, dans lequel le nombre de parties de serrage conductrices (6, 10) est de deux et lesdits câbles (2, 3) sont serrés sur lesdites parties de serrage conductrices (6, 10) de façon à être espacée et sensiblement parallèles.

10. Commutateur de liaison (1) selon l'une quelconque des revendications précédentes, dans lequel lesdites parties de serrage conductrices (6, 10) sont adaptées pour être interchangeables de façon à serrer une série d'extrémités de câble profilées de surfaces différentes.

11. Commutateur de liaison (1) selon l'une quelconque des revendications précédentes, dans lequel lesdites parties de serrage conductrices (6, 10) comprennent un moyen de serrage élastique destiné à serrer de façon élastique lesdits câbles (2, 3) sur lesdites parties de serrage conductrices.

12. Commutateur de liaison (1) selon la revendication 11, dans lequel ledit moyen de serrage élastique comprend une rondelle Belleville (66) pressée contre ledit câble (2, 3).

13. Commutateur de liaison (1) selon la revendication 3, dans lequel ledit verrouillage par came (19) comprend une surface profilée qui, lorsque ledit verrouillage par came (19) tourne dans une première direction, exerce une pression croissante sur lesdites parties conductrices (17, 18) jusqu'à une position limite prescrite par un agencement de bille de verrouillage (33) et de mortaise (39).

14. Commutateur de liaison (1) selon l'une quelconque des revendications précédentes, dans lequel lesdites parties de serrage conductrices (6, 10) comprennent une série de surfaces de contact initial (57) qui réalisent un contact initial avec une surface d'accouplement initiale (53, 54) de ladite unité de terminaison de commutation (20), lesdites surfaces initiales (53, 54) étant différentes desdites surfaces d'accouplement (50, 51), de telle sorte que le contact initial soit réalisé sur une surface subséquemment inopérante de ladite unité de terminaison de commutation (20).
